# EUROPÄISCHE PATENTSCHRIFT

(11) **EP 0 801 219 B1**
(45) Veröffentlichungstag und Bekanntmachung des Hinweises auf die Patenterteilung: **03.01.2001**
(21) Anmeldenummer: 97105872.2
(22) Anmeldetag: 09.04.1997
(51) Int. Cl.: F02G 1/043

(54) **Wärmekraftmaschine mit bewegtem Regenerator**
Heat engine with moving regenerator
Moteur thermique avec régénerateur mobile

(30) Priorität: 11.04.1996 DE 19614359
(43) Veröffentlichungstag der Anmeldung: 15.10.1997
(73) Patentinhaber: Obermoser, Karl, 90592 Lindelburg (DE)
(72) Erfinder: Obermoser, Karl, 90592 Lindelburg (DE)
(74) Vertreter: Becker Kurig Straus

(56) Entgegenhaltungen:
- DE-A- 4 109 289
- NL-A- 7 514 182
- US-A- 3 604 821
- US-A- 3 788 772

## Beschreibung

Die Erfindung betrifft eine Wärmekraftmaschine der im Oberbegriff der Ansprüche 1 und 8 genannten sowie aus der DE-A1-41 09 289 bekannten Art mit bewegtem Regenerator. Insbesondere betrifft die Erfindung eine Wärmekraftmaschine zum Gewinnen mechanischer Energie aus Solarenergie. Ebenso die US-A-3788772 zeigt eine Wärmekraftmaschine gemäß der Obebegriffe der Ansprüche 1 und 8.

Eine spezielle Form einer Wärmekraftmaschine mit Regenerator stellt beispielsweise der Stirlingmotor dar, auch Heißgasmotor genannt, der neben der Dampfmaschine die älteste Wärmekraftmaschine verkörpert. Der thermodynamische Prozeß des Stirlingmotors besteht idealisiert aus vier Zustandsänderungen: Kompression bei niedriger Temperatur (Isotherme mit Wärmeabfuhr); Wärmezufuhr bei konstantem Volumen (Isochore); Expansion bei hoher Temperatur (Isotherme mit Wärmezufuhr) und Wärmeabfuhr bei konstantem Volumen (Isochore). In der Regel haben Stirlingmotoren einen nichtbewegten Regenerator. Ausnahmen bilden Niedertemperatur-Stirlingmotore und Cryocooler.

Bei Stirlingmotoren der vorstehend erläuterten Art ist üblicherweise ein Hilfsorgan vorgesehen, durch das der Regenerator zwischen der Wärmesenke und der Wärmequelle hin- und herbewegt wird. Bei diesem Hilfsorgan kann es sich um eine mechanische Kopplung zwischen dem Arbeitskolben und dem Regenerator unter Zwischenschaltung einer Schwungmasse handeln. Der Nachteil dieser Anordnung besteht in ihrem relativ komplizierten Aufbau.

Alternativ hierzu ist es bekannt, den Regenerator eines Stirlingmotors durch ein separates volumenänderndes Bauteil in Gestalt eines kleinen Hilfskolbens hin- und herzubewegen, der seine Energie aus den Druckschwankungen des Arbeitsmediums im Gehäuse des Stirlingmotors bezieht. Wie bei der vorstehend genannten Lösung der mechanischen Rückkopplung vom Arbeitskolben zum Regenerator hat auch dieses Konzept den Nachteil, daß ein zusätzliches Organ, nämlich der Hilfskolben erforderlich ist. Außerdem wird die vom Hilfskolben erzeugte Kraft über eine relativ kleine Fläche auf den Regenerator übertragen. Die vom Regenerator zu überwindenden Kräfte, nämlich seine Massenträgheit und sein Strömungswiderstand, sind jedoch homogen über das gesamte Regeneratorvolumen verteilt. Aus diesem Grund muß die räumliche Differenz zwischen dem Kraftangebot vom Hilfskolben und dem Kraftbedarf vom Regenerator durch diesen selbst aufgefangen werden. Der Regenerator ist jedoch für größere mechanische Belastungen aufgrund seiner hochporösen Struktur nicht geeignet. Aus diesem Grund ist die Verwendung eines Hilfskolbens nur für sehr geringe Frequenzen des Stirlingmotors geeignet, bei denen keine nennenswerten Massenträgheitskräfte auftreten, und damit nur für geringe Leistungsdichten. Wenn andererseits die Leistungsdichte vorgegeben ist, wie beispielsweise bei sonnengespeisten Flachkollektormotoren, sind mit diesem Konzept wegen der geringen Frequenz große Bewegungsamplituden des Regenerators ebenso wie des Arbeitskolbens verbunden. Da außerdem eine relativ hohe Kolbenmasse erforderlich ist, sind die Herstellungskosten dieses Wärmekraftmaschinen-Typs entsprechend hoch.

Ferner ist aus der JP-3-78554 A eine Wärmekraftmaschine bekannt, die einen großen Verschiebungszylinder und koaxial dazu einen kleinen Kolbenzylinder aufweist, die durch eine Schraubenfeder verbunden sind.

Der Erfindung liegt die Aufgabe zugrunde, eine Wärmekraftmaschine der eingangs genannten Art mit bewegtem Regenerator zu schaffen, mit der höhere Arbeitsfrequenzen und Leistungsdichten als mit dem herkömmlichen Stirlingmotor erzielbar sind.

Gelöst wird diese Aufgabe durch die Gegenstände der Ansprüche 1 und 9. Vorteilhafte Weiterbildungen der Erfindung sind in den Unteransprüchen angegeben.

Unter Arbeitskolben ist im Zusammenhang mit der vorliegenden Erfindung jedes Organ zu verstehen, das geeignet ist, das Arbeitsvolumen zu ändern, z.B. eine Membran, ein einendig geschlossener Faltenbalg, eine Flüssigkeitssäule oder eine Gassäule.

Mit anderen Worten arbeitet die erfindungsgemäß ausgebildete Wärmekraftmaschine ohne ein eine höhere Frequenz hemmendes Hilfsorgan zur Steuerung des Regenerators derart, daß die bei der Regeneratorbewegung im gesamten Regenerator homogen verteilt auftretenden Bremskräfte durch im gesamten Regenerator homogen verteilte Arbeitskräfte überwunden werden, so daß der Regenerator bei seiner Hub- bzw. Schwingbewegung zwischen der Wärmesenke und der Wärmequelle von mechanischen Belastungen vollständig freigehalten wird. Aufgrund der belastungsfreien Hubbewegung des Regenerators, kann dieser auch mit hohen Frequenzen bis hin zu beispielsweise 50 Hz oder darüber arbeiten.

Mit anderen Worten wird der Regenerator aufgrund seines erfindungsgemäßen Antriebs über den Volumenstrom des Arbeitsmediums belastungsfrei mit diesem Strom mitgetragen. Die Bewegung des Regenerators erfolgt dabei aufgrund seiner eigenen Massenträgheit phasenverschoben zu derjenigen des Arbeitskolbens. Die Phasenverschiebung ist durch die Masse und den Strömungswiderstand des Regenerators einstellbar und variiert zwischen > 0 und < 90 Grad.

Im Gegensatz zum eingangs erwähnten Stirlingmotor verläuft der thermodynamische Prozeß bei der erfindungsgemäßen Wärmekraftmaschine zwischen zwei Isothermen und zwei Polytropen.

Möglichkeiten, dem erfindungsgemäß schwingenden System Nutzenergie zu entziehen bzw. zuzuführen, sind an sich bekannt und bedürfen deshalb im vorliegenden Zusammenhang keiner gesonderten Erläuterung.

Eine bevorzugte Ausführungsform der erfindungsgemäßen Wärmekraftmaschine sieht eine konstruktiv einfache Ausbildung seiner wesentlichen Elemente, nämlich des Regenerators, der Wärmesenke und der Wärmequelle als zueinander parallel verlaufende flache Elementen vor. In dieser Ausgestaltung eignet sich die erfindungsgemäße Wärmekraftmaschine insbesondere für einen solaren Antrieb.

Der Arbeitskolben der erfindungsgemäßen Wärmekraftmaschine kann zur Erzeugung des Volumenstromantriebs für den Regenerator in unterschiedlicher Weise sowie in unterschiedlicher Position gegenüber der Wärmequelle, der Wärmesenke und dem Regenerator angeordnet sein. Eine kompakte Bauform der Wärmekraftmaschine ergibt sich bei einer Anordnung des Kolbens in Gegenüberlage zur Wärmequelle am Gehäuse der Wärmekraftmaschine, beispielsweise in Gestalt eines über der Wärmequelle an der Gehäusewandung geführten konventionellen Kolbens.

Gemäß einer vorteilhaften Weiterbildung der Erfindung sind zur Erzeugung des regeneratorfördernden Volumenstroms zwei Arbeitskolben vorgesehen, die beide ausgehend von der Wärmequellenseite der Quelle-Regenerator-Senke Anordnung angetrieben werden. Dabei sind die beiden Arbeitskolben bevorzugt in einer mit dem Gehäuse der Quelle-Regenerator-Senke Anordnung integral gebildeten Kammer quer zur Bewegungsrichtung des Regenerators hubbeweglich gelagert. Bevorzugt haben beide Arbeitskolben ferner gleiche Form, gleiche Masse und gleiche Maße.

Die Erfindung schlägt außerdem eine Kältemaschine in Gestalt einer Zwillings-Wärmekraftmaschine vor, bei der die Maschineneinheiten spiegelsymmetrisch aus zwei mit ihren Wärmequellen auswärts weisenden und mit ihren Wärmesenken aneinandergrenzenden Wärmekraftmaschinen-Einheiten der vorstehend erläuterten Art bestehen, wobei die beiden Regeneratoren von getrennten Volumenströmen angetrieben werden. Im einzelnen ist der von dem einen Arbeitskolben bewirkte Volumenstrom zu jeder Zeit dem von dem anderen Arbeitskolben bewirkten Volumenstrom entgegengesetzt gerichtet und der Volumenstrom in der Spiegelebene der Maschine ist zu jeder Zeit gleich Null.

Die Verwendung der erfindungsgemäßen Wärmekraftmaschine ist grundsätzlich vielfältig. Eine besonders bevorzugte Verwendung betrifft den Einsatz der Wärmekraftmaschine in Solaranlagen.

Nachfolgend wird die Erfindung anhand der Zeichnung beispielhaft näher erläutert; es zeigen:
- Fig. 1: eine erste Ausführungsform der erfindungsgemäßen Wärmekraftmaschine unter Verwendung eines einzigen Arbeitskolbens,
- Fig. 2: eine zweite Ausführungsform der erfindungsgemäßen Wärmekraftmaschine unter Verwendung von zwei Arbeitskolben,
- Fig. 3: eine dritte Ausführungsform der erfindungsgemäßen Wärmekraftmaschine als Zwillingskältemaschine,
- Fig. 4: eine vierte Ausführungsform der erfindungsgemäßen Wärmekraftmaschine unter Verwendung eines einzigen Arbeitskolbens, und
- Fig. 5: eine Abwandlung der Ausführungsform von Fig. 4.

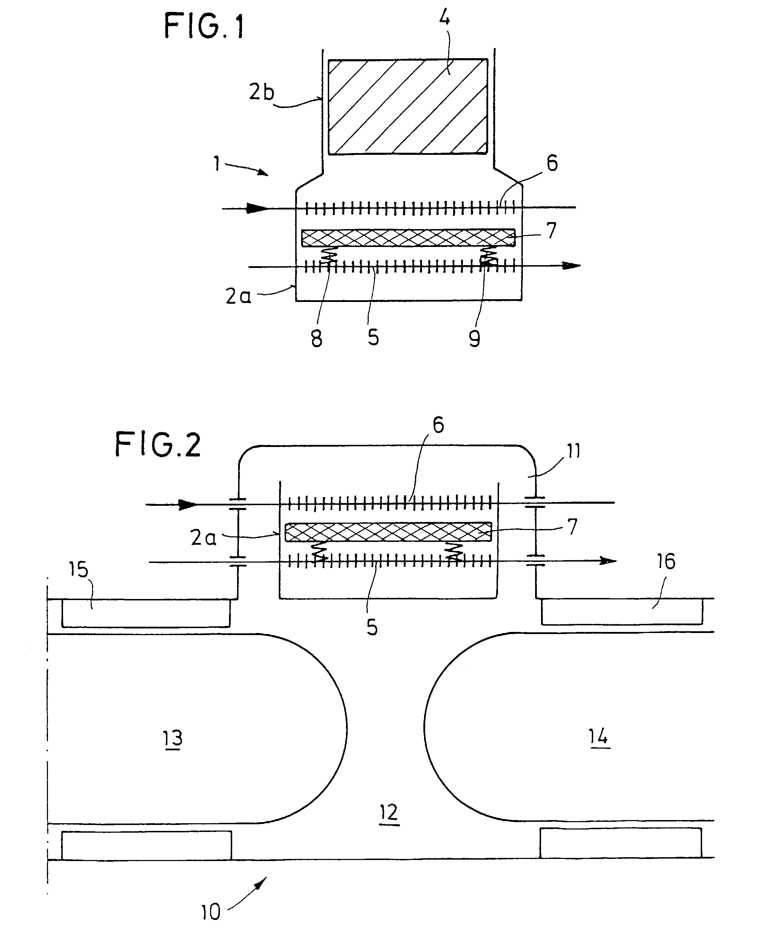

Wie in Fig. 1 schematisch gezeigt, umfaßt die erste Ausführungsform der erfindungsgemäßen Wärmekraftmaschine ein allgemein zylinderförmiges Gehäuse 1 mit einem durchmessergrößeren Gehäuseteil 2a und einem durchmesserkleineren Gehäuseteil 2b. Im durchmesserkleineren Gehäuseteil 2b ist ein Arbeitskolben 4 in Richtung der Gehäuselängsachse hin- und hergehend bzw. hubbeweglich geführt. Der durchmessergrößere Gehäuseteil 2a enthält jeweils in flacher Ausführung eine Wärmesenke 5, eine der Wärmesenke 5 gegenüberliegende sowie unterhalb des Kolbens 4 angeordnete Wärmequelle 6 und einen Regenerator 7, der im Arbeitsraum zwischen der Wärmesenke 5 und der Wärmequelle 6 in Richtung der Gehäuselängsachse beweglich angeordnet ist. Der Aufbau der Wärmesenke 5, der Wärmequelle 6 und des Regenerators 7 gehört zum Stand der Technik und ist speziell auf dem Gebiet von Stirlingmotoren dem Fachmann geläufig. Grundsätzlich kommen für diese Bestandteile der Wärmekraftmaschine unterschiedliche Materialien in Betracht. Wesentlich ist, daß der Regenerator 7 aus einem porösen, fluiddurchlässigen Material besteht, das als Wärmezwischenspeicher geeignet ist. Auch der Arbeitskolben 4 kann aus einem an sich beliebigen, beispielsweise für den Einsatz in einem Stirlingmotor geeigneten Material bestehen.

Der Arbeitsraum der Wärmekraftmaschine bzw. das Gehäuse 1 ist mit einem Arbeitsmedium befüllt, beispielsweise mit Helium oder kostengünstiger mit Luft.

Der Regenerator 7 ist, ebenfalls in an sich bekannter Weise, im Gehäuse 1 derart aufgehängt, daß er ohne nennenswerte Kippbewegungen zwischen der Wärmesenke 5 und der Wärmequelle 6 seine Schwingbewegung ausführen kann. In Fig. 1 sind zu diesem Zweck rein schematisch Federn 8 und 9 an der Unterseite des Regenerators 7 vorgesehen. Zur Führung des Regenerators kommen zusätzlich oder alternativ randseitig mit ihm verbundene und am Gehäuse abgestützte Sicken in Betracht.

Ein wesentliches Merkmal der Erfindung besteht darin, daß der Arbeitskolben 4 so angeordnet ist, daß der durch seine Hubbewegung erzeugte Volumenstrom den Regenerator 7 frei von mechanischen Belastungen mitnimmt. Dadurch wird erreicht, daß die Wärmekraftmaschine mit in weitem Bereich beliebiger Arbeitsfrequenz arbeiten kann.

Eine zweite Ausführungsform der erfindungsgemäßen Wärmekraftmaschine ist in Fig. 2 gezeigt. Dabei handelt es sich um eine Wärmekraftmaschine mit zwei Arbeitskolben. Im einzelnen besteht die Wärmekraftmaschine von Fig. 2 aus dem Durchmesser-größeren Gehäuseteil 2a der Wärmekraftmaschine von Fig. 1, in welchem in derselben Weise wie in Fig. 1 die Wärmesenke 5, die Wärmequelle 6 und der Regenerator angeordnet sind. Das Gehäuseteil 2a ist im oberen Teil 11 einer Kolbenkammer 10 angeordnet, deren unterer volumengrößerer Teil 12 zwei identisch ausgebildete koaxiale Arbeitskolben 13 und 14 gleitgeführt aufnimmt. Zur Gleitführung der Kolben 13 und 14 quer zur Regenerator-Bewegungsrichtung ist ein Führungsring 15 bzw. 16 vorgesehen. Der Innenraum des Gehäuses 10 ist mit dem Arbeitsmedium gefüllt, das auch den Raum im Gehäuseteil 2 ausfüllt. Die Arbeitsweise der Wärmekraftmaschine von Fig. 2 ist grundsätzlich ähnlich wie diejenige von Fig. 1.

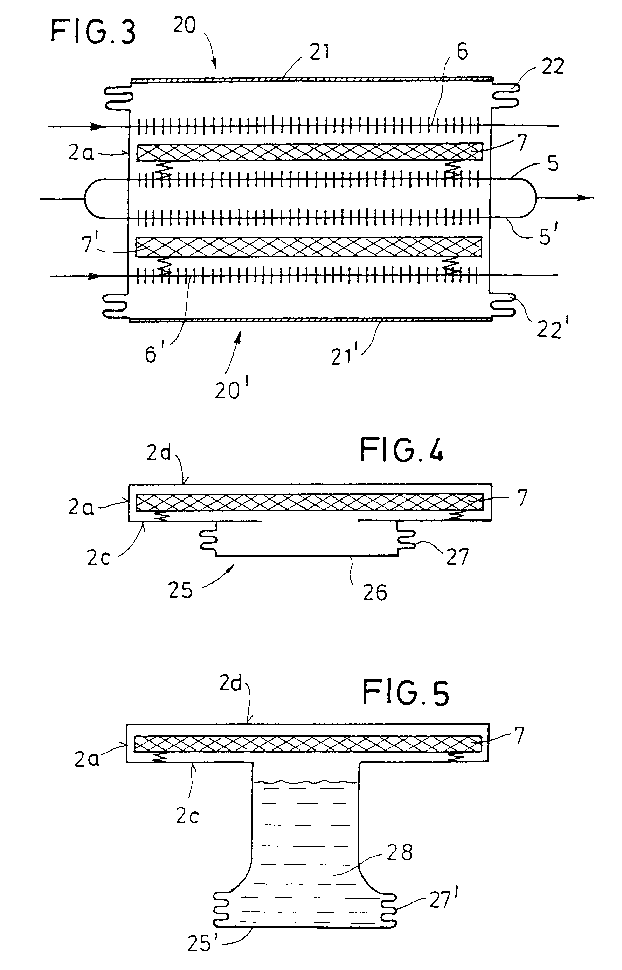

Fig. 3 zeigt eine Zwillings-Wärmekraftmaschine, die aus zwei in Fig. 1 gezeigten Wärmekraftmaschinen-Einheiten aufgebaut ist und als wärmebetriebene Kältemaschine arbeitet. Im einzelnen besteht die Zwillings-Wärmekraftmaschine aus einer gespiegelten Anordnung der beiden Gehäuseteile 2a der Ausführungsform von Fig. 1, sowie der darin angeordneten Stirlingmaschinenbauelemente. Unter Verwendung der Bezugsziffern von Fig. 1 umfaßt die Zwillings-Wärmekraftmaschine demnach ein Gehäuseteil 2a, in welchem eine Wärmesenke 5, eine Wärmequelle 6 und ein dazwischen angeordneter Regenerator 7 vorgesehen sind. Wärmequellenseitig ist das Gehäuse 2a durch einen Kolben 20 verschlossen, der aus einer Kolbenwand 21 besteht, die über einen Faltenbalg 22 dicht mit dem Gehäuseteil 2a verbunden ist. Grundsätzlich kommt jedoch auch die klassische Ausbildung des Kolbens 4 von Fig. 1 in Betracht.

Der Vorteil der Wärmekraftmaschine von Fig. 2 und Fig. 3 gegenüber denjenigen von Fig. 1 und Fig. 4 ist, daß beim Betrieb der Maschine der Maschinenschwerpunkt in Ruhe bleibt, da die Maschine gewissermaßen ausgewuchtet ist.

Wie bereits angeführt, umfaßt die Zwillings-Wärmekraftmaschine von Fig. 3 eine gespiegelte Anordnung des soeben erläuterten Gehäuseteils 2a mit den darin angeordneten Maschinenbauteilen und dem außen angeordneten Kolben, und dieselben Bauteile sind im gespiegelten Teil mit denselben Bezugsziffern, ergänzt durch ein " ' " bezeichnet. Bei der dargestellten Ausführungsform sind die beiden Wärmesenken 5 und 5' miteinander verbunden. Alternativ hierzu können die Wärmesenken 5 und 5' auch einstückig gebildet sein.

Die Gehäuseteile 2a und 2a', die durch die Kolben 20 und 20' verschlossen sind, sind mit einem gemeinsamen Arbeitsmedium befüllt und arbeiten daher auf dasselbe Arbeitsvolumen. Dieser doppelte Stirlingmotor arbeitet gegentaktig, d.h. die Kolben 20 und 20' führen ebenso wie die Regeneratoren 7 und 7' synchron Hubbewegungen aus und arbeiten auf dasselbe Arbeitsmedium bzw. werden durch dasselbe Arbeitsmedium belastungsfrei angetrieben, wie vorstehend erläutert.

Fig. 4 zeigt die vierte Ausführungsform der erfindungsgemäßen Wärmekraftmaschine. Diese Ausführungsform unterscheidet sich von der in Fig. 1 gezeigten ersten Ausführungsform prinzipiell dadurch, daß das ganze Gehäuse den Kolben bildet.

Im einzelnen ist der Arbeitskolben nicht in einem gesonderten Gehäuseteil 2b gleitgeführt, sondern das ganze Gehäuse mit Ausnahme der Bodenplatte 26, die über einen Faltenbalg 27 dicht mit dem Gehäuseteil 2a verbunden ist, und auf der diese Ausführungsform der erfindungsgemäßen Wärmekraftmaschine abgestützt ist, bildet den Kolben.

Ferner ist die Gehäusebodenwand 2c, an welche der Faltenbalg 25 mit der Bodenplatte 26 angeschlossen ist, und die eine zentrale Kommunikationsöffnung zum Hindurchtritt des Arbeitsmediums aufweist, als Wärmesenke gebildet und die gegenüberliegende Gehäusedeckenwand 2d ist als Wärmequelle gebildet. Diese Wärmekraftmaschine eignet sich aufgrund ihrer freiliegenden Wärmequelle besonders gut als Solarwärmekraftmaschine.

Eine abgewandelte Ausführungsform der Wärmekraftmaschine von Fig. 4 ist in Fig. 5 gezeigt. Bei dieser Ausführungsform nimmt das Gehäuseunterteil eine Wassersäule 28 auf, die zum einen aufgrund der Differenz zwischen Balgquerschnitt und Säulenquerschnitt das Gehäusegewicht trägt, und die zum anderen aus demselben Grund gegenphasig zum Gehäuse schwingt, so daß die Summe aus Wassermasse und Gehäuse die Kolbenmasse bildet.

## Patentansprüche

1. Wärmekraftmaschine mit
einem Gehäuse (2, 2a, 2b), das einen Arbeitsraum festlegt,
einem im Arbeitsraum enthaltenen Arbeitsmedium,
einer im bzw. am Gehäuse (2, 2a, 2b) angeordneten Wärmequelle (6, 6',) sowie einer im bzw. am Gehäuse (2, 2a) angeordneten Wärmesenke (5, 5,),
einem einen Wärmezwischenspeicher bildenden Regenerator (7, 7'), der im Arbeitsraum zwischen Wärmequelle (6, 6') und Wärmesenke (5, 5') beweglich gelagert ist, und
wenigstens einem vom Arbeitsmedium beaufschlagten Arbeitskolben (4, 13, 14, 20, 20'),
dadurch gekennzeichnet,
daß die Wärmequelle (6, 6') und die Wärmesenke (5, 5') im Bereich des einen bzw. des anderen Hubbewegungsendes des Regenerators (7, 7') angeordnet sind
daß der Arbeitskolben (4, 13, 14, 20, 20') im bzw. am Gehäuse (2, 2a, 2b) so angeordnet ist, daß mit seiner Kompressionsbewegung ein Volumenstrom des Arbeitsmediums von der Wärmequelle (6, 6') zur Wärmesenke (5, 5') und mit seiner Expansionsbewegung ein Volumenstrom in umgekehrter Richtung verbunden ist, und die Volumenströmung durch den Strömungswiderstand des Regenerators (7, 7') diesen relativ zum Arbeitsmedium bewegt.

2. Wärmekraftmaschine nach Anspruch 1 oder 2, dadurch gekennzeichnet, daß der Regenerator (7, 7'), die Wärmequelle (6, 6') und die Wärmesenke (5, 5') als zueinander parallel verlaufende flache Elemente gebildet sind.

3. Wärmekraftmaschine nach Anspruch 2, dadurch gekennzeichnet, daß die Wärmequelle im Gehäuse (2b) zwischen Arbeitskolben (4, 20, 20') und Regenerator (7, 7') angeordnet ist.

4. Wärmekraftmaschine nach Anspruch 4, dadurch gekennzeichnet, daß der Arbeitskolben (13 bzw. 14) in einer eigenen Kammer (10) gelagert ist.

5. Wärmekraftmaschine nach Anspruch 5, dadurch gekennzeichnet, daß in der Kammer (10) zwei Arbeitskolben (13, 14) vorgesehen sind, die beide den Volumenstromantrieb für den Regenerator erzeugen.

6. Wärmekraftmaschine nach einem der Ansprüche 1 bis 4, dadurch gekennzeichnet, daß die Wärmekraftmaschine durch gespiegelte Anordnung ihrer Bauteile doppelt ausgeführt ist und folgende Struktur aufweist: ein gemeinsames Gehäuse (2a, 2a'), eine bzw. zwei im Zentrum des Gehäuses angeordnete Wärmesenke(n) (5, 5'), beidseits der Wärmesenke bzw. Wärmesenken (5, 5') jeweils einen Regenerator (7, 7'), gefolgt von jeweils einer Wärmequelle (6, 6') und einem außenliegenden Arbeitskolben (20, 20'), und daß beide Arbeitskolben (20, 20') den Volumenstromantrieb für die Regeneratoren (7, 7') erzeugen.

7. Wärmekraftmaschine nach Anspruch 6 oder 7, dadurch gekennzeichnet, daß die beiden Arbeitskolben (13, 14) gleiche Formen, Maße und Massen, aufweisen.

8. Wärmekraftmaschine mit
einem Gehäuse (2a, 25), das einen Arbeitsraum festlegt,
einem im Arbeitsraum enthaltenen Arbeitsmedium,
einer im bzw. am Gehäuse (2a, 25) angeordneten Wärmequelle (2d) sowie einer im bzw. am Gehäuse (2a, 25) angeordneten Wärmesenke (5, 5'),
einem einen Wärmezwischenspeicher bildenden Regenerator (7, 7'), der im Arbeitsraum zwischen Wärmequelle (2d) und Wärmesenke (2c) beweglich gelagert ist, und
wenigstens einem vom Arbeitsmedium beaufschlagten Arbeitskolben,
dadurch gekennzeichnet,
daß der Arbeitskolben als Gehäuse mit Ausnahme einer Bodenplatte des Gehäuses mit veränderlichem Arbeitsraum gebildet ist, wobei der Arbeitskolben mit seiner Kompressionsbewegung einen Volumenstrom des Arbeitsmediums von der Wärmequelle (2d) zur Wärmesenke (2c) und mit seiner Expansionsbewegung einen Volumenstrom in umgekehrter Richtung verursacht und die Volumenströmung durch den Strömungswiderstand des Regenerators (7, 7') diesen relativ zum Arbeitsraum bewegt.

9. Wärmekraftmaschine nach Anspruch 1, 2, 3 oder 9, dadurch gekennzeichnet, daß die Wärmequelle (6, 6', 2d) und die Wärmesenke (5, 5', 2d) den Boden bzw. die Decke des Gehäuses (2a) bilden.

## Claims

1. Heat engine, having a housing (2, 2a, 2b) which defines a working space, a working medium contained in the working space, a heat source (6, 6') disposed respectively in or respectively on the housing (2, 2a, 2b), as well as a heat sink (5, 5') disposed in or respectively on the housing (2, 2a), a regenerator (7, 7') which forms an intermediate heat accumulator and is displaceably mounted in the working space between heat source (6, 6') and heat sink (5, 5'), and at least one working piston (4, 13, 14, 20, 20') which is acted upon by the working medium, characterised in that the heat source (6, 6') and the heat sink (5, 5') are disposed in the region of one or respectively the other lifting movement end of the regenerator (7, 7'), in that the working piston (4, 13, 14, 20, 20') is disposed in or respectively on the housing (2, 2a, 2b) in such a manner that a volumetric flow of the working medium from the heat source (6, 6') to the heat sink (5, 5') is connected to its compression movement, and a volumetric flow in the reverse direction is connected to its expansion movement, and the volumetric flow displaces the regenerator (7, 7') relative to the working medium through the flow resistance of said regenerator.

2. Heat engine according to claim 1, characterised in that the regenerator (7, 7'), the heat source (6, 6') and the heat sink (5, 5') are formed as flat elements extending parallel to one another.

3. Heat engine according to claim 1 or 2, characterised in that the heat source is disposed in the housing (2b) between working pistons (4, 20, 20') and regenerator (7, 7').

4. Heat engine according to claim 3, characterised in that the working piston (13 or 14 respectively) is mounted in its own chamber (10).

5. Heat engine according to claim 4, characterised in that two working pistons (13, 14), which both produce the volumetric flow drive for the regenerator, are provided in the chamber (10).

6. Heat engine according to one of claims 1 to 4, characterised in that the heat engine has a double configuration because of a reflected disposition of its components and has the following construction: a common housing (2a, 2a'), one or respectively two heat sink(s) (5, 5') disposed in the centre of the housing, a respective regenerator (7, 7') on both sides of the respective heat sink or heat sinks (5, 5'), followed by a respective heat source (6, 6') and an externally situated working piston (20, 20'), and in that the two working pistons (20, 20') produce the volumetric flow drive for the regenerators (7, 7').

7. Heat engine according to claim 5 or 6, characterised in that the two working pistons (13, 14) have identical configurations, dimensions and masses.

8. Heat engine, having a housing (2a, 25) which defines a working space, a working medium contained in the working space, a heat source (2d) disposed in or respectively on the housing (2a, 25), as well as a heat sink (5, 5') disposed in or respectively on the housing (2a, 25), a regenerator (7, 7') which forms an intermediate heat accumulator and is displaceably mounted in the working space between heat source (2d) and heat sink (2c), and at least one working piston which is acted upon by the working medium, characterised in that the working piston is formed as a housing, with the exception of a base plate of the housing, and has a variable working space, the working piston causing a volumetric flow of the working medium from the heat source (2d) to the heat sink (2c) with its compression movement and a volumetric flow in the reverse direction with its expansion movement, and the volumetric flow displaces the regenerator (7, 7') relative to the working space through the flow resistance of said regenerator.

9. Heat engine according to claim 1, 2 or 8, characterised in that the heat source (6, 6', 2d) and the heat sink (5, 5', 2c) form the bottom and the top of the housing (2a) respectively.

## Revendications

1. Moteur thermique comportant :
- un carter (2, 2a, 2b) qui définit une chambre de travail,
- un fluide de travail contenu dans la chambre de travail,
- une source de chaleur (6, 6') agencée dans ou sur le carter (2, 2a, 2b),
- ainsi qu'un puits thermique (5, 5') agencé dans ou sur le carter (2, 2a, 2b),
- un régénérateur (7, 7') formant un accumulateur thermique intermédiaire qui est monté mobile dans la chambre de travail entre la source de chaleur (6, 6') et le puits thermique (5, 5'), et
- au moins un piston de travail (4, 13, 14, 20, 20') sollicité par le fluide de travail,
caractérisé en ce que :
- la source de chaleur (6, 6') et le puits thermique (5, 5') sont agencés dans la région de l'une et de l'autre extrémités respectives de la course de déplacement du régénérateur (7, 7'), et
- le piston de travail (4, 13, 14, 20, 20') est agencé dans ou sur le carter (2, 2a, 2b), de telle sorte que par son mouvement de compression, un débit volumétrique du fluide de travail se produit depuis la source de chaleur (6, 6') jusqu'au puits thermique (5, 5') et par son mouvement d'expansion, un débit volumétrique se produit dans le sens inverse, et l'écoulement volumétrique déplace le régénérateur (7, 7') par rapport au fluide de travail à cause de la résistance à l'écoulement du régénérateur (7, 7').

2. Moteur thermique selon la revendication 1, caractérisé en ce que le régénérateur (7, 7'), la source de chaleur (6, 6') et le puits thermique (5, 5') sont réalisés en tant qu'éléments plats s'étendant parallèlement les uns aux autres.

3. Moteur thermique selon la revendication 1, caractérisé en ce que la source de chaleur est agencée dans le carter (2b) entre le piston de travail (4, 20, 20') et le régénérateur (7, 7').

4. Moteur thermique selon la revendication 3, caractérisé en ce que le piston de travail (13, 14) est monté dans une propre chambre (10).

5. Moteur thermique selon la revendication 4, caractérisé en ce que dans la chambre (10) sont prévus deux pistons de travail (13, 14) qui produisent l'entraînement du débit volumétrique pour le régénérateur.

6. Moteur thermique selon l'une quelconque des revendications 1 à 3, caractérisé en ce que le moteur thermique est réalisé en double par agencement symétrique de ses composants, et en ce qu'il présente la structure suivante : un carter (2a, 2a') commun, un ou deux puits thermiques (5, 5') agencés au centre du carter, un régénérateur (7, 7') respectif de chaque côté du ou des puits thermiques (5, 5'), suivi d'une source de chaleur (6, 6') respective et d'un piston de travail (20, 20') respectif situé à l'extérieur, et en ce que les deux pistons de travail (20, 20') produisent l'entraînement du débit volumétrique pour les régénérateurs (7, 7').

7. Moteur thermique selon l'une ou l'autre des revendications 5 et 6, caractérisé en ce que les deux pistons de travail (13, 14) présentent les mêmes formes, dimensions et masses.

8. Moteur thermique comportant :
- un carter (2a, 25) qui définit une chambre de travail,
- un fluide de travail contenu dans la chambre de travail,
- une source de chaleur (2d) agencée dans ou sur le carter (2a, 25),
- ainsi qu'un puits thermique (5, 5') agencé dans ou sur le carter (2a, 25),
- un régénérateur (7, 7') formant un réservoir thermique intermédiaire qui est monté mobile dans la chambre de travail entre la source de chaleur (2d) et le puits thermique (2c), et
- au moins un piston de travail sollicité par le fluide de travail,
caractérisé en ce que :
le piston de travail est réalisé sous forme de carter, à l'exception d'une plaque de fond du carter, avec une chambre de travail variable, le piston de travail provoquant par son mouvement de compression un débit volumétrique de fluide de travail depuis la source de chaleur (2d) jusqu'au puits thermique (2c) et par son mouvement d'expansion, un débit volumétrique dans le sens inverse, et l'écoulement volumétrique déplace le régénérateur (7, 7') par rapport à la chambre de travail à cause de la résistance à l'écoulement du régénérateur (7, 7').

9. Moteur thermique selon la revendication 1, 2 ou 8, caractérisé en ce que la source de chaleur (6, 6', 2d) et le puits thermique (5, 5', 2c) forment respectivement le fond et le plafond du carter (2a).
